# EUROPEAN PATENT APPLICATION

(11) **EP 4 738 079 A1**
(43) Date of publication of application: **06.05.2026**
(21) Application number: 23945644.5
(22) Date of filing: 06.11.2023
(51) Int. Cl.: G06F 3/0481

(54) **DISPLAY METHOD AND APPARATUS, STORAGE MEDIUM, PROGRAM PRODUCT AND ELECTRONIC DEVICE**

(30) Priority: 18.07.2023 CN 202310877974
(71) Applicant: Guangdong Midea Kitchen Appliances Manufacturing Co., Ltd., Foshan, Guangdong 528311 (CN)
(72) Inventor: QIAN, Zhida, Foshan, Guangdong 528311 (CN); SUN, Yuwen, Foshan, Guangdong 528311 (CN)
(74) Representative: RGTH
(86) International application number: PCT/CN2023/130010
(87) International publication number: WO 2025/015764

(57) **Abstract**

The present application relates to the technical field of information display, and provides a display method and apparatus, a storage medium, a program product and an electronic device. A cooking information display method comprises: displaying first cooking information, wherein the first cooking information comprises at least one function identifier, and the function identifier is associated with at least one keyword in the first cooking information; and in response to a first input for the function identifier, displaying a function interface, wherein the function type corresponding to the function interface is associated with information content of the first cooking information. When the cooking information of at least one cooking step of the recipe is displayed, the functions that may be used in the current cooking step are displayed simultaneously. This enables providing assistance to the user's cooking operation when the user views the cooking steps in the recipe.

## Description

### CROSS-REFERENCE TO RELATED APPLICATIONS

The present application claims priority to Chinese Patent Application No. 202310877974.7 filed with the China National Intellectual Property Administration on July 18, 2023 and entitled "DISPLAY METHOD AND APPARATUS, STORAGE MEDIUM, PROGRAM PRODUCT AND ELECTRONIC DEVICE", the entire contents of which are herein incorporated by reference.

### FIELD

The present application relates to the technical field of information display, and specifically relates to a display method and apparatus, a storage medium, a program product and an electronic device.

### BACKGROUND

In relevant technologies, when recipes are displayed through websites, videos, or recipe software, these display media can only output information unilaterally, for example, displaying graphic-text content, or audio/video content, making them functionally limited.

### SUMMARY

The present application aims to at least solve one of the technical problems existing in the prior art or related art.

Therefore, a first aspect of the present application provides a cooking information display method.

A second aspect of the present application provides a cooking information display apparatus.

A third aspect of the present application provides a cooking information display apparatus.

A fourth aspect of the present application provides a computer-readable storage medium.

A fifth aspect of the present application provides a computer program product.

A sixth aspect of the present application provides an electronic device.

In view of this, the first aspect of the present application provides a cooking information display method, comprising:
displaying first cooking information, wherein the first cooking information comprises at least one function identifier, and the function identifier is associated with at least one keyword in the first cooking information; in response to a first input for the function identifier, displaying a function interface, wherein the function type corresponding to the function interface is associated with the information content of the first cooking information.

In the technical solution, the cooking information display method is applied to electronic devices or cooking devices, and the electronic devices comprise mobile phones, tablet computers, PDAs (Personal Digital Assistants), and the like. Taking the implementation of the above display method by an electronic device as an example, the electronic device displays the first cooking information, and the first cooking information refers to the information of at least one step for cooking a dish in a recipe.

The display page of the first cooking information further comprises the function identifier, there may be one or a plurality of function identifiers, and each function identifier is associated with the keywords contained in the first cooking information.

For example, the first cooking information specifically comprises the content "Heating on low heat for 10 minutes", wherein "10 minutes" serves as a keyword. A function identifier corresponding to a timing function is displayed near the keyword "10 minutes".

When a user clicks this function identifier, a function interface is further displayed on the current display interface. The function of the function interface is the timing function associated with the above keyword "10 minutes".

In other words, when the cooking information of at least one cooking step of the recipe is displayed, the functions that may be used in the current cooking step are displayed simultaneously. This enables providing assistance to the user's cooking operation when the user views the cooking steps in the recipe.

In the embodiment of the present application, by displaying the function identifiers associated with recipe content simultaneously when the recipe content is displayed, the user can trigger a function interface with associated functions in a way of clicking the function identifiers, thus enabling the recipe to not only output information content to the user but further provide practical functional assistance for the user's cooking, and then enhancing the functionality of displaying information such as the recipe.

Additionally, the cooking information display method in the above technical solution provided by the present application may further comprise the following additional technical features:
In some technical solutions, the function interface comprises a cooking control identifier, and the method further comprises:
generating a corresponding cooking control signal in response to a second input for the cooking control identifier;
sending the cooking control signal to a target cooking device, wherein the cooking control signal is configured to instruct the target cooking device to execute a cooking step corresponding to the first cooking information.

In the technical solution, the cooking control identifier is displayed in the function interface, and the cooking control identifier is configured to control the target cooking device, enabling it to execute a corresponding cooking step in accordance with the cooking parameters carried in the first cooking information.

Specifically, the cooking information display method can be implemented with electronic devices such as mobile phones and tablet computers, and the electronic devices can conduct data communication with the target cooking device.

For example, assume the device displaying the first cooking information is a mobile phone and the target cooking device is an oven. The first cooking information corresponds to a cooking step of baking in the recipe, for example, a baking step. A cooking control identifier "Start baking" is displayed in the function interface. When the user clicks the cooking control identifier "Start baking", the mobile phone generates a corresponding cooking control signal based on the cooking parameters in the first cooking information such as a baking temperature and a baking duration, and transmits the cooking control signal to the target cooking device via communication methods like Bluetooth or Wi-Fi.

After receiving the cooking control signal, the target cooking device executes the baking operation based on the cooking control signal.

The cooking information display method according to the embodiment of the present application can provide the user with a convenient cooking control interface while displaying information such as cooking steps, thus enabling the recipe to not only output information content to the user but further provide convenience for the user's cooking process.

In some technical solutions, the first cooking information comprises a cooking duration, and the function interface comprises a timing identifier. The method further comprises: starting timing in response to a third input for the timing identifier; and generating prompt information when a timing duration reaches the cooking duration.

In the technical solution, the cooking steps displayed by the recipe often comprise information associated with the cooking duration, such as "Simmer on low heat for 5 minutes" and "High temperature frying for 30 seconds". Conventional recipes can only display these step durations but fail to assist users with timing.

For this situation, in the cooking information display method according to the embodiment of the present application, when the displayed first cooking information comprises a keyword related to the cooking duration, a function identifier corresponding to the timing function may be displayed near the keyword related to the cooking duration, for example, a timing identifier is displayed near a keyword "5 minutes".

After the user clicks the function identifier corresponding to the timing function, a function interface for the timing function will pop up. The function interface displays a timing identifier. After the user performs cooking operation in accordance with the steps described in the first cooking information, when reaching a step that requires timing operation, for example, "Simmer on low heat for 5 minutes", the user can click the timing identifier in the function interface. At this point, the function interface will immediately display and execute the timing operation, and the timing duration matches the cooking duration. For instance, after the user clicks the timing identifier of "Simmer on low heat for 5 minutes", a 5-minute timing will start automatically.

When the timing duration reaches 5 minutes, prompt information for notifying the user that the cooking time is up is generated. The prompt information may be displayed in the form of text or patterns, and at the same time, the user is reminded by making a prompt sound, lighting up a prompt light, or controlling the mobile phone to vibrate, etc.

In the embodiment of the present application, a timer function is embedded in the recipe display page, which helps the user realize convenient timing reminders when encountering cooking steps requiring timing during the cooking process, to provide convenience for the user's cooking process.

In some technical solutions, the first cooking information comprises cooking data, and the function interface comprises a conversion identifier. The method further comprises:
in response to a fourth input for the conversion identifier, adjusting the measurement unit of the cooking data from a first measurement unit to a second measurement unit.

In the technical solution, the cooking data specifically comprises data-type information that may be used during the cooking process, such as ingredient quantities, water quantity, and condiment quantities.

Since different types of data may have different measurement units, for example, the measurement unit for ingredients may be "gram" and that for water may be "milliliter", inconsistent measurement units can cause inconvenience to the user's actual operations. For instance, if a user only has a weighing scale which cannot measure liquid volume, the user needs to perform the conversion manually.

For this situation, in the cooking information display method according to the embodiment of the present application, when the displayed first cooking information comprises keywords of cooking data with measurement units, a function identifier corresponding to a measurement unit conversion function may be displayed near the keywords related to the cooking data, for example, a conversion function icon is displayed near a keyword "5ml".

After the user clicks the function identifier corresponding to a conversion table function, a function interface displaying the conversion function will pop up. A conversion identifier is displayed in this function interface. When the user clicks the conversion identifier and the measurement unit of the cooking data in the first cooking information and a variety of target units will be automatically displayed.

For instance, if the first cooking information comprises "500ml of water", the original first measurement unit is identified to be "ml", and a plurality of target measurement units such as "g", "kg", and "L" are displayed simultaneously.

When the user selects the second measurement unit "g" via the fourth input, the conversion is automatically performed, to convert 500ml of water to 500g.

In the embodiment of the present application, a unit conversion function is embedded in the recipe display page, which helps the user conveniently convert the measurement units of ingredient quantities during the cooking process, to provide convenience for the user's cooking process.

In some technical solutions, the display method further comprises: determining a target cooking quantity in response to a fifth input; adjusting the cooking data according to the target cooking quantity and the adjusted cooking data matches the target cooking quantity.

In the technical solution, the ingredient quantities and condiment quantities recorded in the recipe are fixed, for example, fixed for 3 servings. However, when the user is cooking, the number of diners often differs from the number recommended in the recipe. Consequently, the proportions of cooking ingredients and condiments are further different, making it impossible for the user to cook directly using the quantities recorded in the recipe.

For this situation, in the cooking information display method according to the embodiment of the present application, when the displayed first cooking information comprises keywords of cooking data with measurement units, an interface for the user to input the target cooking quantity can be displayed.

The target cooking quantity may be the number of diners or the quantity of the main ingredient.

For example, if a preset number of diners recorded in the recipe is 3 and the target cooking quantity input by the user is 5 diners, the cooking data recorded in the recipe will be automatically converted in an equal proportion based on the proportional relationship between the user-input target cooking quantity and the preset cooking quantity. This ensures the converted cooking data such as ingredient quantities and condiment quantities to match the target cooking quantity input by the user.

In the embodiment of the present application, a cooking quantity conversion function is embedded in the recipe display page. This function helps the user adjust the proportions of various cooking parameters in the recipe based on the actual number of diners or the quantity of the main ingredient during the cooking process, to provide convenience for the user's cooking process.

In some technical solutions, the cooking data comprises a cooking temperature, a cooking duration, and/or an ingredient quantity.

In this technical solution, the cooking data specifically comprises the cooking temperature, which may be a cooking temperature based on the heating power of the target cooking device, for example, double-sided baking at 180°C.

The cooking duration specifically refers to the cooking duration corresponding to a specific cooking step, such as baking for 10 minutes.

The ingredient quantity comprises both the quantity of a main ingredient and the quantities of condiments, for example, 300g of green vegetables, 500ml of water, and 5g of salt.

In some technical solutions, the display method further comprises: receiving a voice input; determining a target media file based on the voice input; and playing the target media file.

In the technical solution, when the user is engaged in cooking operations, the user may find it inconvenient to operate the electronic device, at this point, the user can "ask questions" to the electronic recipe via voice input. The electronic recipe will automatically search for or generate audio or video content that addresses the user's question and play it.

Specifically, upon receiving the user's voice input, a voice recognition module may be configured to identify key information in the user's voice information, to identify the content of the user's question, such as questions regarding ingredients, cooking tools, or cooking operations.

After identifying the user's question, the target media file is searched for or generated based on the question. The target media file may be an audio file or a video file. By playing the target media file, the user's question is answered, no manual operation by the user is required, nor does the user need to focus on text content, to conveniently provide assistance to the user.

In some technical solutions, the first cooking information is the information of the N^{th} cooking step in the target cooking recipe, and N is a positive integer; the method further comprises: displaying second cooking information in response to a sixth input, wherein the second cooking information is the information of the (N+1)^{th} cooking step in the target cooking recipe.

In the technical solution, when the information of the target cooking recipe is displayed, the recipe content may be displayed by adopting a method for the cooking steps one by one. The user can obtain the recipe information by referring to each step recorded in the recipe according to their own cooking progress.

For example, if a certain dish requires frying first and then boiling, the cooking information for the frying step is displayed when the user is performing the frying step, and the cooking information for the boiling step is displayed when the user proceeds to the boiling step.

Specifically, when the first cooking information of the N^{th} cooking step in the recipe is displayed, if a sixth input of "Next Step" from the user is received, the second cooking information of the (N+1)^{th} cooking step is displayed.

By displaying the cooking recipe step by step, the embodiment of the present application can improve the display effect of the recipe content.

In some technical solutions, the display method further comprises: displaying a content interface in response to a seventh input for at least one keyword, wherein the displayed content of the content interface is associated with the at least one keyword.

In this technical solution, the cooking recipe may comprise some professional terms, and the user may find it difficult to understand the actual meanings of these professional terms without professional knowledge.

For example, a cooking recipe may comprise professional terms of operation steps such as "blanching" and "deodorizing". The user without cooking knowledge may not understand the specific operation methods of these operation steps.

For this situation, in the embodiment of the present application, hyperlinks may be set for keywords such as professional terms. When the user clicks a specific keyword, a content interface associated with the selected keyword is automatically displayed. The displayed content of this content interface specifically refers to the content for explaining and illustrating the keyword selected by the user, and the content in the content interface may be in the form of text, video, or audio, to help the user grasp the meaning of the professional term.

In the embodiment of the present application, tips are provided for keywords such as professional terms. When the user encounters unfamiliar terms, they can quickly display a content interface containing the tips by clicking the keywords, which helps the user quickly grasp the professional terms and improves the information display efficiency.

A second aspect of the present application provides a cooking information display apparatus, comprising: a display module for displaying first cooking information, wherein the first cooking information comprises at least one function identifier associated with at least one keyword in the first cooking information; and in response to a first input for the function identifier, displaying a function interface, wherein the function type corresponding to the function interface is associated with the information content of the first cooking information.

In this technical solution, the cooking information display method is applied to an electronic device or a cooking device, the electronic device comprises a mobile phone, a tablet computer, a personal digital assistant, etc. Taking the electronic device executing the above display method as an example, the electronic device displays the first cooking information, which is information of at least one step for cooking a dish in the recipe.

The display page of the first cooking information further comprises a function identifier. There may be one or a plurality of function identifiers, and each function identifier is associated with a keyword contained in the first cooking information.

For example, the first cooking information specifically comprises the content "Heat on low heat for 10 minutes", wherein "10 minutes" is a keyword. A function identifier corresponding to the timing function is displayed near the keyword "10 minutes".

When the user clicks this function identifier, a function interface is further displayed in the current display interface. The function of this function interface is the timing function associated with the aforementioned keyword "10 minutes".

In other words, when the cooking information of at least one cooking step in the recipe is displayed, the functions that may be used in the current cooking step are displayed simultaneously. This enables the user to obtain assistance for their cooking operations while viewing the cooking steps in the recipe.

In the embodiment of the present application, while the recipe content is displayed, function identifiers associated with the recipe content are displayed simultaneously, then the user can trigger a function interface with associated functions by clicking the function identifiers, enabling the recipe to not only output information content to user but further provide practical functional assistance for the user's cooking operations, to enhance the functionality of displaying information such as the recipe.

A third aspect of the present application provides a cooking information display apparatus, comprising: a memory for storing a program or an instruction; and a processor for implementing the steps of the cooking information display method provided in any one of the above technical solutions when executing the program or instruction. Therefore, the apparatus further comprises all the beneficial effects thereof, which are not repeated herein to avoid redundancy.

A fourth aspect of the present application provides a computer-readable storage medium having a program or an instruction stored therein. When the program or instruction is executed by a processor, the steps of the cooking information display method provided in any one of the above technical solutions are implemented. Therefore, the computer-readable storage medium further comprises all the beneficial effects thereof, which are not repeated herein to avoid redundancy.

A fifth aspect of the present application provides a computer program product. The computer program product is stored in a storage medium, and when executed by at least one processor, implements the steps of the cooking information display method provided in any one of the above technical solutions. Therefore, the computer program product further comprises all the beneficial effects thereof, which are not repeated herein to avoid redundancy.

A sixth aspect of the present application provides an electronic device, comprising: the cooking information display device provided in any one of the above technical solutions; and/or the computer-readable storage medium provided in any one of the above technical solutions; and/or the computer program product provided in any one of the above technical solutions. Therefore, the electronic device further comprises all the beneficial effects thereof, which are not repeated herein to avoid redundancy.

### BRIEF DESCRIPTION OF THE DRAWINGS

The above-mentioned and/or additional aspects and advantages of the present application will become apparent and easily understandable from the description of the embodiments in conjunction with the following accompanying drawings, wherein:
FIG. 1 is a flow chart of a cooking information display method according to an embodiment of the present application;
FIG. 2 is a schematic view of a display interface according to an embodiment of the present application;
FIG. 3 is a block diagram of the structure of a cooking information display apparatus according to an embodiment of the present application; and
FIG. 4 is a block diagram of the structure of a cooking information display apparatus according to an embodiment of the present application.

### DETAILED DESCRIPTION OF THE APPLICATION

To more clearly understand the above purposes, features and advantages of the present application, the present application will be further detailed hereinafter in combination with the accompanying drawings and embodiments. It should be indicated that in the case of no conflict, the embodiments and the features in the embodiments of the present application can be combined with each other.

Many details are illustrated in the following description for the convenience of a thorough understanding to the present application, but the present application can further be implemented using other embodiments other than these described herein. Therefore, the protection scope of the present application is not limited to the specific embodiments disclosed in the following text.

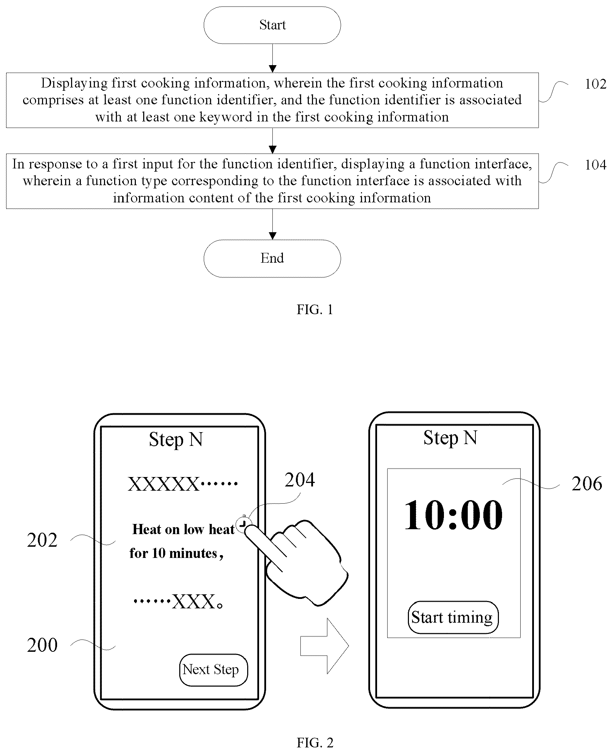

A display method, apparatus, storage medium, program product, and electronic device provided according to some embodiments of the present application are described hereinafter with reference to FIG. 1 to FIG. 4.

In some embodiments of the present application, a cooking information display method is provided. FIG. 1 shows a flow chart of the cooking information display method in the embodiments of the present application. As shown in FIG. 1, the cooking information display method comprises:
Step 102, displaying first cooking information, wherein the first cooking information comprises at least one function identifier, and the function identifier is associated with at least one keyword in the first cooking information;
Step 104, in response to a first input for the function identifier, displaying a function interface, wherein the function type corresponding to the function interface is associated with the information content of the first cooking information.

In the embodiment, the cooking information display method is applied to electronic devices or cooking devices, and the electronic devices comprise mobile phones, tablet computers, PDAs (Personal Digital Assistants), and the like. Taking the implementation of the above display method by an electronic device as an example, the electronic device displays the first cooking information, and the first cooking information refers to the information of at least one step for cooking a dish in a recipe.

The display page of the first cooking information further comprises the function identifier, there may be one or a plurality of function identifiers, and each function identifier is associated with the keywords contained in the first cooking information.

FIG. 2 is a schematic view of a display interface according to an embodiment of the present application. As shown in FIG. 2, a display interface 200 displays first cooking information 202, specifically comprising the content "Heating on low heat for 10 minutes", wherein "10 minutes" serves as a keyword. A function identifier 204 corresponding to a timing function is displayed near the keyword "10 minutes".

When a user clicks this function identifier, a function interface 206 is further displayed on the current display interface 200. The function of this function interface 206is the timing function associated with the above keyword "10 minutes".

In other words, when the cooking information of at least one cooking step of the recipe is displayed, the functions that may be used in the current cooking step are displayed simultaneously. This enables providing assistance to the user's cooking operation when the user views the cooking steps in the recipe.

In the embodiment of the present application, by displaying the function identifiers associated with recipe content simultaneously when the recipe content is displayed, the user can trigger a function interface with associated functions in a way of clicking the function identifiers, thus enabling the recipe to not only output information content to the user but further provide practical functional assistance for the user's cooking, and then enhancing the functionality of displaying information such as the recipe.

In some embodiments, the function interface comprises a cooking control identifier, and the method further comprises:
generating a corresponding cooking control signal in response to a second input for the cooking control identifier;
sending the cooking control signal to a target cooking device, wherein the cooking control signal is configured to instruct the target cooking device to execute a cooking step corresponding to the first cooking information.

In the embodiment of the present application, the cooking control identifier is displayed in the function interface, and the cooking control identifier is configured to control the target cooking device, enabling it to execute a corresponding cooking step in accordance with the cooking parameters carried in the first cooking information.

Specifically, the cooking information display method can be implemented with electronic devices such as mobile phones and tablet computers, and the electronic devices can conduct data communication with the target cooking device.

For example, assume the device displaying the first cooking information is a mobile phone and the target cooking device is an oven. The first cooking information corresponds to a cooking step of baking in the recipe, for example, a baking step. A cooking control identifier "Start baking" is displayed in the function interface. When the user clicks the cooking control identifier "Start baking", the mobile phone generates a corresponding cooking control signal based on the cooking parameters in the first cooking information such as a baking temperature and a baking duration, and transmits the cooking control signal to the target cooking device via communication methods like Bluetooth or Wi-Fi.

After receiving the cooking control signal, the target cooking device executes the baking operation based on the cooking control signal.

The cooking information display method according to the embodiment of the present application can provide the user with a convenient cooking control interface while displaying information such as cooking steps, thus enabling the recipe to not only output information content to the user but further provide convenience for the user's cooking process.

In some embodiments, the first cooking information comprises a cooking duration, and the function interface comprises a timing identifier. The method further comprises: starting timing in response to a third input for the timing identifier; and generating prompt information when a timing duration reaches the cooking duration.

In the embodiment of the present application, the cooking steps displayed by the recipe often comprise information associated with the cooking duration, such as "Simmer on low heat for 5 minutes" and "High temperature frying for 30 seconds". Conventional recipes can only display these step durations but fail to assist users with timing.

For this situation, in the cooking information display method according to the embodiment of the present application, when the displayed first cooking information comprises a keyword related to the cooking duration, a function identifier corresponding to the timing function may be displayed near the keyword related to the cooking duration, for example, a timing identifier is displayed near a keyword "5 minutes".

After the user clicks the function identifier corresponding to the timing function, a function interface for the timing function will pop up. The function interface displays a timing identifier. After the user performs cooking operation in accordance with the steps described in the first cooking information, when reaching a step that requires timing operation, for example, "Simmer on low heat for 5 minutes", the user can click the timing identifier in the function interface. At this point, the function interface will immediately display and execute the timing operation, and the timing duration matches the cooking duration. For instance, after the user clicks the timing identifier of "Simmer on low heat for 5 minutes", a 5-minute timing will start automatically.

When the timing duration reaches 5 minutes, prompt information for notifying the user that the cooking time is up is generated. The prompt information may be displayed in the form of text or patterns, and at the same time, the user is reminded by making a prompt sound, lighting up a prompt light, or controlling the mobile phone to vibrate, etc.

In the embodiment of the present application, a timer function is embedded in the recipe display page, which helps the user realize convenient timing reminders when encountering cooking steps requiring timing during the cooking process, to provide convenience for the user's cooking process.

In some embodiments, the first cooking information comprises cooking data, and the function interface comprises a conversion identifier. The method further comprises:

in response to a fourth input for the conversion identifier, adjusting the measurement unit of the cooking data from a first measurement unit to a second measurement unit.

In the embodiment of the present application, the cooking data specifically comprises data-type information that may be used during the cooking process, such as ingredient quantities, water quantity, and condiment quantities.

Since different types of data may have different measurement units, for example, the measurement unit for ingredients may be "gram" and that for water may be "milliliter", inconsistent measurement units can cause inconvenience to the user's actual operations. For instance, if a user only has a weighing scale which cannot measure liquid volume, the user needs to perform the conversion manually.

For this situation, in the cooking information display method according to the embodiment of the present application, when the displayed first cooking information comprises keywords of cooking data with measurement units, a function identifier corresponding to a measurement unit conversion function may be displayed near the keywords related to the cooking data, for example, a conversion function icon is displayed near a keyword "5ml".

After the user clicks the function identifier corresponding to a conversion table function, a function interface displaying the conversion function will pop up. A conversion identifier is displayed in this function interface. When the user clicks the conversion identifier, the measurement unit of the cooking data in the first cooking information and a variety of target units will be automatically displayed.

For instance, if the first cooking information comprises "500ml of water", the original first measurement unit is identified to be "ml", and a plurality of target measurement units such as "g", "kg", and "L" are displayed simultaneously.

When the user selects the second measurement unit "g" via the fourth input, the conversion is automatically performed, to convert 500ml of water to 500g.

In the embodiment of the present application, a unit conversion function is embedded in the recipe display page, which helps the user conveniently convert the measurement units of ingredient quantities during the cooking process, to provide convenience for the user's cooking process.

In some embodiments, the display method further comprises: determining a target cooking quantity in response to a fifth input; adjusting the cooking data according to the target cooking quantity and the adjusted cooking data matches the target cooking quantity.

In the embodiment of the present application, the ingredient quantities and condiment quantities recorded in the recipe are fixed, for example, fixed for 3 servings. However, when the user is cooking, the number of diners often differs from the number recommended in the recipe. Consequently, the proportions of cooking ingredients and condiments are further different, making it impossible for the user to cook directly using the quantities recorded in the recipe.

For this situation, in the cooking information display method according to the embodiment of the present application, when the displayed first cooking information comprises keywords of cooking data with measurement units, an interface for the user to input the target cooking quantity can be displayed.

The target cooking quantity may be the number of diners or the quantity of the main ingredient.

For example, if a preset number of diners recorded in the recipe is 3 and the target cooking quantity input by the user is 5 diners, the cooking data recorded in the recipe will be automatically converted in an equal proportion based on the proportional relationship between the user-input target cooking quantity and the preset cooking quantity. This ensures the converted cooking data such as ingredient quantities and condiment quantities to match the target cooking quantity input by the user.

In the embodiment of the present application, a cooking quantity conversion function is embedded in the recipe display page. This function helps the user adjust the proportions of various cooking parameters in the recipe based on the actual number of diners or the quantity of the main ingredient during the cooking process, to provide convenience for the user's cooking process.

In some embodiments, the cooking data comprises a cooking temperature, a cooking duration, and/or an ingredient quantity.

In the embodiment of the present application, the cooking data specifically comprises the cooking temperature, which may be a cooking temperature based on the heating power of the target cooking device, for example, double-sided baking at 180°C.

The cooking duration specifically refers to the cooking duration corresponding to a specific cooking step, such as baking for 10 minutes.

The ingredient quantity comprises both the quantity of a main ingredient and the quantities of condiments, for example, 300g of green vegetables, 500ml of water, and 5g of salt.

In some embodiments, the display method further comprises: receiving a voice input; determining a target media file based on the voice input; and playing the target media file.

In the embodiment of the present application, when the user is engaged in cooking operations, the user may find it inconvenient to operate the electronic device, at this point, the user can "ask questions" to the electronic recipe via voice input. The electronic recipe will automatically search for or generate audio or video content that addresses the user's question and play it.

Specifically, upon receiving the user's voice input, a voice recognition module may be configured to identify key information in the user's voice information, to identify the content of the user's question, such as questions regarding ingredients, cooking tools, or cooking operations.

After identifying the user's question, the target media file is searched for or generated based on the question. The target media file may be an audio file or a video file. By playing the target media file, the user's question is answered, no manual operation by the user is required, nor does the user need to focus on text content, to conveniently provide assistance to the user.

In some embodiments, the first cooking information is the information of the N^{th} cooking step in the target cooking recipe, and N is a positive integer; the method further comprises: displaying second cooking information in response to a sixth input, wherein the second cooking information is the information of the (N+1)^{th} cooking step in the target cooking recipe.

In the embodiment of the present application, when the information of the target cooking recipe is displayed, the recipe content may be displayed by adopting a method for the cooking steps one by one. The user can obtain the recipe information by referring to each step recorded in the recipe according to their own cooking progress.

For example, if a certain dish requires frying first and then boiling, the cooking information for the frying step is displayed when the user is performing the frying step, and the cooking information for the boiling step is displayed when the user proceeds to the boiling step.

Specifically, when the first cooking information of the N^{th} cooking step in the recipe is displayed, if a sixth input of "Next Step" from the user is received, the second cooking information of the (N+1)^{th} cooking step is displayed.

By displaying the cooking recipe step by step, the embodiment of the present application can improve the display effect of the recipe content.

In some embodiments, the display method further comprises: displaying a content interface in response to a seventh input for at least one keyword, wherein the displayed content of the content interface is associated with the at least one keyword.

In the embodiment of the present application, the cooking recipe may comprise some professional terms, and the user may find it difficult to understand the actual meanings of these professional terms without professional knowledge.

For example, a cooking recipe may comprise professional terms of operation steps such as "blanching" and "deodorizing". The user without cooking knowledge may not understand the specific operation methods of these operation steps.

For this situation, in the embodiment of the present application, hyperlinks may be set for keywords such as professional terms. When the user clicks a specific keyword, a content interface associated with the selected keyword is automatically displayed. The displayed content of this content interface specifically refers to the content for explaining and illustrating the keyword selected by the user, and the content in the content interface may be in the form of text, video, or audio, to help the user grasp the meaning of the professional term.

In the embodiment of the present application, tips are provided for keywords such as professional terms. When the user encounters unfamiliar terms, they can quickly display a content interface containing the tips by clicking the keywords, which helps the user quickly grasp the professional terms and improves the information display efficiency.

In some embodiments of the present application, a step-by-step multi-function integrated recipe front-end display solution is provided, which displays the graphic text of the recipe in a step-by-step manner, and displays the ingredients, quantities, and tool information required for the current step. Meanwhile, the following functions are embedded in the recipe steps:
(1) a timer function;
(2) a unit converter;
(3) a recipe proportion converter;
(4) cooking device control;
(5) a temperature and time converter for converting a cooking temperature and cooking time based on ingredient quantities;
(6) embedded tips for key and difficult steps; and
(7) voice question-and-answer system interaction.

Through the integration and implementation of the above functions in a recipe step interface, auxiliary tools during the recipe preparation process are provided to the user to the maximum extent, to enhance the convenience of recipe use.

Specifically, when the recipe is displayed, the user clicks to enter the recipe interface, and the recipe content is displayed in a sliding manner by default. The user may select a cooking mode to enter a cooking display mode, that is, according to preset recipe steps, the content of one recipe step is displayed each time, comprising the textual description of the recipe step, image or video guidance. Additionally, the type and quantity of ingredients required for the current step, as well as the device mode, temperature, and time information used in the current step are displayed separately.

The function of the timer is to address situations in which many steps require timing during cooking. Usually, the user estimates the time manually or uses external timing tools for timing, which may lead to complex operations or inaccurate timing.

The timer function is embedded in the steps where timing is required, such as fermentation time, resting time, heating time, and preheating time, and presented in the form of links. Time digits are displayed in the same or different colors. Exemplarily, a timer icon may be displayed in the interface to prompt the user to click and directly initiate the countdown for the time in the step. Upon the user's clicking, a timing interface is displayed, a duration that needs timing is already set in the timing interface, and timing starts automatically once the user confirms the selection.

The function of the unit converter is to address situations in which the user is unfamiliar with the units of ingredient quantities provided in the recipe, and it enables proportional conversion of different units for specific ingredients, and assists users in confirming the ingredient quantities.

The unit converter is displayed independently in the form of an icon in the display interface of the recipe steps. Exemplarily, it may be located in the toolbar on the right side of the display interface. Upon the user's clicking, the user can freely select the ingredient type, the current unit, and the target unit for conversion, to easily realize the conversion of the measurement units of the ingredients.

The user often does not prepare dishes strictly according to the fixed quantities provided in the recipe and may have needs for quantity adjustments. The function of the recipe proportion converter is to calculate the optimal recipe ratio based on factors such as the number of diners or mold conditions, ensuring flexible quantity adjustment while maintaining the correct proportion.

The recipe proportion converter may be embedded in an initial sliding recipe interface. The users can adjust and convert the ingredient quantities required for preparing the recipe based on data such as the number of diners and the sizes of cooking utensils. After conversion, all ingredient quantity information in the recipe content is automatically updated.

The function of device one-click control is to eliminate the need for the user to manually adjust the cooking parameters of the device when the user is cooking with reference to the recipe. It enables the user to conveniently control the cooking mode, cooking temperature, and cooking time of the target cooking device with one click, to enhance convenience.

The device control function may be embedded in the recipe display interface in the form of a hyperlink. Upon the user's click, the interface jumps to a mode confirmation interface, which displays the machine mode, time, and temperature information that need to be set currently. After the user clicks "Confirm", the cooking parameters are sent to the target cooking device, and the target cooking device is controlled to start operating.

The function of the temperature and time converter is to address the situation in which the user prepares dishes of different quantities, the optimal cooking temperature and time may need to be adjusted to achieve the best results.

The temperature and time converter belongs to a built-in function, and enables the user to calculate information such as the required heat intensity based on data comprising the number of diners, the quantity of the main ingredient, and the size and power parameters of the cooking device, automatically converts the cooking temperature and time required for the current quantity input by the user and updates the cooking temperature and time information in the recipe automatically.

The function of tips is to address the situation in which the user encounters relatively professional terms, unfamiliar descriptions, or complex steps when the user prepares dishes according to the recipe. These problems may hinder user' understanding of the recipe and to affect the cooking process. Tip links are set on these keywords, and corresponding pop-up windows with graphic or short video content are displayed to address the user's questions.

Tips may be embedded as hyperlinks in the keywords of the recipe steps. Keywords associated with tips are highlighted in a distinct color, and a prompt icon such as a light bulb icon may be displayed in the top-right corner. When the user clicks, a corresponding pop-up window appears, and displays graphic or video content to explain the keyword.

The voice question-and-answer interaction function is intended to address recipe-related questions encountered by the user during the cooking process, comprising questions about ingredients, tools, operations, and failure phenomena, to assist the user throughout the cooking process.

The voice question-and-answer interaction function is displayed as a floating icon in the top-right corner of all recipe interfaces. Upon clicking the icon, the user can input a question via voice, and a voice broadcast will be returned in response.

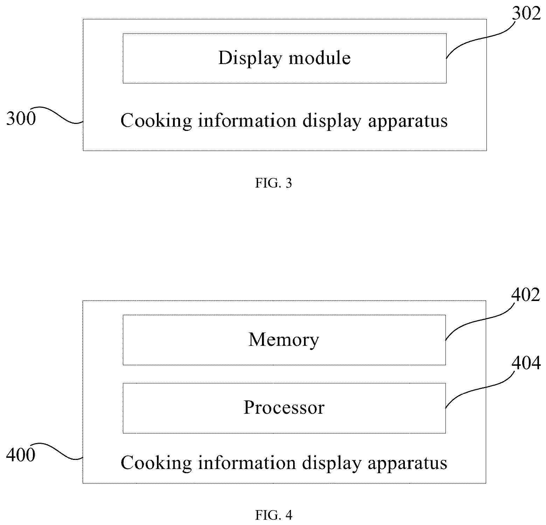

In some embodiments of the present application, a cooking information display apparatus is provided. FIG. 3 is a block diagram of the structure of a cooking information display apparatus according to an embodiment of the present application. As shown in FIG. 3, the cooking information display apparatus 300 comprises:
a display module 302 for displaying first cooking information, wherein the first cooking information comprises at least one function identifier associated with at least one keyword in the first cooking information; and in response to a first input for the function identifier, displaying a function interface, wherein the function type corresponding to the function interface is associated with the information content of the first cooking information.

In the embodiments of the present application, the cooking information display method is applied to an electronic device or a cooking device, the electronic device comprises a mobile phone, a tablet computer, a personal digital assistant, etc. Taking the electronic device executing the above display method as an example, the electronic device displays the first cooking information, which is information of at least one step for cooking a dish in the recipe.

The display page of the first cooking information further comprises a function identifier. There may be one or a plurality of function identifiers, and each function identifier is associated with a keyword contained in the first cooking information.

For example, the first cooking information specifically comprises the content "Heat on low heat for 10 minutes", wherein "10 minutes" is a keyword. A function identifier corresponding to the timing function is displayed near the keyword "10 minutes".

When the user clicks this function identifier, a function interface is further displayed in the current display interface. The function of this function interface is the timing function associated with the aforementioned keyword "10 minutes".

In other words, when the cooking information of at least one cooking step in the recipe is displayed, the functions that may be used in the current cooking step are displayed simultaneously. This enables the user to obtain assistance for their cooking operations while viewing the cooking steps in the recipe.

In the embodiment of the present application, while the recipe content is displayed, function identifiers associated with the recipe content are displayed simultaneously, then the user can trigger a function interface with associated functions by clicking the function identifiers, enabling the recipe to not only output information content to user but further provide practical functional assistance for the user's cooking operations, to enhance the functionality of displaying information such as the recipe.

In some embodiments, the function interface comprises a cooking control identifier, and the cooking information display apparatus further comprises:
a generation module, configured to generate a corresponding cooking control signal in response to a second input for the cooking control identifier;
a sending module, configured to send the cooking control signal to a target cooking device, wherein the cooking control signal is configured to instruct the target cooking device to execute a cooking step corresponding to the first cooking information.

In the embodiment of the present application, the cooking control identifier is displayed in the function interface, and the cooking control identifier is configured to control the target cooking device, enabling it to execute a corresponding cooking step in accordance with the cooking parameters carried in the first cooking information.

Specifically, the cooking information display method can be implemented with electronic devices such as mobile phones and tablet computers, and the electronic devices can conduct data communication with the target cooking device.

For example, assume the device displaying the first cooking information is a mobile phone and the target cooking device is an oven. The first cooking information corresponds to a cooking step of baking in the recipe, for example, a baking step. A cooking control identifier "Start baking" is displayed in the function interface. When the user clicks the cooking control identifier "Start baking", the mobile phone generates a corresponding cooking control signal based on the cooking parameters in the first cooking information such as a baking temperature and a baking duration, and transmits the cooking control signal to the target cooking device via communication methods like Bluetooth or Wi-Fi.

After receiving the cooking control signal, the target cooking device executes the baking operation based on the cooking control signal.

The cooking information display method according to the embodiment of the present application can provide the user with a convenient cooking control interface while displaying information such as cooking steps, thus enabling the recipe to not only output information content to the user but further provide convenience for the user's cooking process.

In some embodiments, the first cooking information comprises a cooking duration, and the function interface comprises a timing identifier. The cooking information display apparatus further comprises:
a timing module, configured to start timing in response to a third input for the timing identifier; and
a prompt module, configured to generate prompt information when a timing duration reaches the cooking duration.

In the embodiments of the present application, the cooking steps displayed by the recipe often comprise information associated with the cooking duration, such as "Simmer on low heat for 5 minutes" and "High temperature frying for 30 seconds". Conventional recipes can only display these step durations but fail to assist users with timing.

For this situation, in the cooking information display method according to the embodiment of the present application, when the displayed first cooking information comprises a keyword related to the cooking duration, a function identifier corresponding to the timing function may be displayed near the keyword related to the cooking duration, for example, a timing identifier is displayed near a keyword "5 minutes".

After the user clicks the function identifier corresponding to the timing function, a function interface for the timing function will pop up. The function interface displays a timing identifier. After the user performs cooking operation in accordance with the steps described in the first cooking information, when reaching a step that requires timing operation, for example, "Simmer on low heat for 5 minutes", the user can click the timing identifier in the function interface. At this point, the function interface will immediately display and execute the timing operation, and the timing duration matches the cooking duration. For instance, after the user clicks the timing identifier of "Simmer on low heat for 5 minutes", a 5-minute timing will start automatically.

When the timing duration reaches 5 minutes, prompt information for notifying the user that the cooking time is up is generated. The prompt information may be displayed in the form of text or patterns, and at the same time, the user is reminded by making a prompt sound, lighting up a prompt light, or controlling the mobile phone to vibrate, etc.

In the embodiment of the present application, a timer function is embedded in the recipe display page, which helps the user realize convenient timing reminders when encountering cooking steps requiring timing during the cooking process, to provide convenience for the user's cooking process.

In some embodiments, the first cooking information comprises cooking data, and the function interface comprises a conversion identifier. The cooking information display apparatus further comprises:
a converting module, in response to a fourth input for the conversion identifier, adjusting the measurement unit of the cooking data from a first measurement unit to a second measurement unit.

In the embodiment of the present application, the cooking data specifically comprises data-type information that may be used during the cooking process, such as ingredient quantities, water quantity, and condiment quantities.

Since different types of data may have different measurement units, for example, the measurement unit for ingredients may be "gram" and that for water may be "milliliter", inconsistent measurement units can cause inconvenience to the user's actual operations. For instance, if a user only has a weighing scale which cannot measure liquid volume, the user needs to perform the conversion manually.

For this situation, in the cooking information display method according to the embodiment of the present application, when the displayed first cooking information comprises keywords of cooking data with measurement units, a function identifier corresponding to a measurement unit conversion function may be displayed near the keywords related to the cooking data, for example, a conversion function icon is displayed near a keyword "5ml".

After the user clicks the function identifier corresponding to a conversion table function, a function interface displaying the conversion function will pop up. A conversion identifier is displayed in this function interface. When the user clicks the conversion identifier, the measurement unit of the cooking data in the first cooking information and a variety of target units will be automatically displayed.

For instance, if the first cooking information comprises "500ml of water", the original first measurement unit is identified to be "ml", and a plurality of target measurement units such as "g", "kg", and "L" are displayed simultaneously.

When the user selects the second measurement unit "g" via the fourth input, the conversion is automatically performed, to convert 500ml of water to 500g.

In the embodiment of the present application, a unit conversion function is embedded in the recipe display page, which helps the user conveniently convert the measurement units of ingredient quantities during the cooking process, to provide convenience for the user's cooking process.

In some embodiments, the cooking information display apparatus further comprises:
a determining module, configured to determine a target cooking quantity in response to a fifth input;
an adjusting module, configured to adjust the cooking data according to the target cooking quantity and the adjusted cooking data matches the target cooking quantity.

In the embodiment of the present application, the ingredient quantities and condiment quantities recorded in the recipe are fixed, for example, fixed for 3 servings. However, when the user is cooking, the number of diners often differs from the number recommended in the recipe. Consequently, the proportions of cooking ingredients and condiments are further different, making it impossible for the user to cook directly using the quantities recorded in the recipe.

For this situation, in the cooking information display method according to the embodiment of the present application, when the displayed first cooking information comprises keywords of cooking data with measurement units, an interface for the user to input the target cooking quantity can be displayed.
The target cooking quantity may be the number of diners or the quantity of the main ingredient.

For example, if a preset number of diners recorded in the recipe is 3 and the target cooking quantity input by the user is 5 diners, the cooking data recorded in the recipe will be automatically converted in an equal proportion based on the proportional relationship between the user-input target cooking quantity and the preset cooking quantity. This ensures the converted cooking data such as ingredient quantities and condiment quantities to match the target cooking quantity input by the user.

In the embodiment of the present application, a cooking quantity conversion function is embedded in the recipe display page. This function helps the user adjust the proportions of various cooking parameters in the recipe based on the actual number of diners or the quantity of the main ingredient during the cooking process, to provide convenience for the user's cooking process.

In some embodiments, the cooking data comprises a cooking temperature, a cooking duration, and/or an ingredient quantity.

In the embodiment of the present application, the cooking data specifically comprises the cooking temperature, which may be a cooking temperature based on the heating power of the target cooking device, for example, double-sided baking at 180°C.

The cooking duration specifically refers to the cooking duration corresponding to a specific cooking step, such as baking for 10 minutes.

The ingredient quantity comprises both the quantity of a main ingredient and the quantities of condiments, for example, 300g of green vegetables, 500ml of water, and 5g of salt.

In some embodiments, the display method further comprises: receiving a voice input; determining a target media file based on the voice input; and playing the target media file.

In the embodiment of the present application, when the user is engaged in cooking operations, the user may find it inconvenient to operate the electronic device, at this point, the user can "ask questions" to the electronic recipe via voice input. The electronic recipe will automatically search for or generate audio or video content that addresses the user's question and play it.

Specifically, upon receiving the user's voice input, a voice recognition module may be configured to identify key information in the user's voice information, to identify the content of the user's question, such as questions regarding ingredients, cooking tools, or cooking operations.

After identifying the user's question, the target media file is searched for or generated based on the question. The target media file may be an audio file or a video file. By playing the target media file, the user's question is answered, no manual operation by the user is required, nor does the user need to focus on text content, to conveniently provide assistance to the user.

In some embodiments, the first cooking information is the information of the N^{th} cooking step in the target cooking recipe, and N is a positive integer; the display module is further configured to display second cooking information in response to a sixth input, wherein the second cooking information is the information of the (N+1)^{th} cooking step in the target cooking recipe.

In the embodiment of the present application, when the information of the target cooking recipe is displayed, the recipe content may be displayed by adopting a method for the cooking steps one by one. The user can obtain the recipe information by referring to each step recorded in the recipe according to their own cooking progress.

For example, if a certain dish requires frying first and then boiling, the cooking information for the frying step is displayed when the user is performing the frying step, and the cooking information for the boiling step is displayed when the user proceeds to the boiling step.

Specifically, when the first cooking information of the N^{th} cooking step in the recipe is displayed, if a sixth input of "Next Step" from the user is received, the second cooking information of the (N+1)^{th} cooking step is displayed.

By displaying the cooking recipe step by step, the embodiment of the present application can improve the display effect of the recipe content.

In some embodiments, the display module is further configured to display a content interface in response to a seventh input for at least one keyword, wherein the displayed content of the content interface is associated with the at least one keyword.

In the embodiment of the present application, the cooking recipe may comprise some professional terms, and the user may find it difficult to understand the actual meanings of these professional terms without professional knowledge.

For example, a cooking recipe may comprise professional terms of operation steps such as "blanching" and "deodorizing". The user without cooking knowledge may not understand the specific operation methods of these operation steps.

For this situation, in the embodiment of the present application, hyperlinks may be set for keywords such as professional terms. When the user clicks a specific keyword, a content interface associated with the selected keyword is automatically displayed. The displayed content of this content interface specifically refers to the content for explaining and illustrating the keyword selected by the user, and the content in the content interface may be in the form of text, video, or audio, to help the user grasp the meaning of the professional term.

In the embodiment of the present application, tips are provided for keywords such as professional terms. When the user encounters unfamiliar terms, they can quickly display a content interface containing the tips by clicking the keywords, which helps the user quickly grasp the professional terms and improves the information display efficiency.

In some embodiments of the present application, a cooking information display apparatus is provided. FIG. 4 is a block diagram of the structure of a cooking information display apparatus according to an embodiment of the present application. As shown in FIG. 4, the cooking information display apparatus 400 comprises: a memory 402 for storing a program or an instruction; and a processor 404 for implementing the steps of the cooking information display method provided in any one of the above embodiments when executing the program or instruction. Therefore, the cooking information display apparatus further comprises all the beneficial effects thereof, which are not repeated herein to avoid redundancy.

In some embodiments of the present application, a computer-readable storage medium is provided, and a program or an instruction stored in the computer-readable storage medium. When the program or instruction is executed by a processor, the steps of the cooking information display method provided in any one of the above embodiments are implemented. Therefore, the computer-readable storage medium further comprises all the beneficial effects thereof, which are not repeated herein to avoid redundancy.

In some embodiments of the present application, a computer program product is provided. The computer program product is stored in a storage medium, and when executed by at least one processor, implements the steps of the cooking information display method provided in any one of the above embodiments. Therefore, the computer program product further comprises all the beneficial effects thereof, which are not repeated herein to avoid redundancy.

In some embodiments of the present application, an electronic device is provided, comprising: the cooking information display device provided in any of the above embodiments; and/or the computer-readable storage medium provided in any one of the above embodiments; and/or the computer program product provided in any one of the above embodiments. Therefore, the electronic device further comprises all the beneficial effects thereof, which are not repeated herein to avoid redundancy.

The methods may be implemented in various different ways according to specific characteristics and/or exemplary applications. For instance, these methods can be implemented through a combination of hardware, firmware and/or software. For example, in a hardware implementation, the processor may be implemented in one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, microcontrollers, microprocessors, electronic devices, other device units for performing the above functions and/or combinations thereof.

A computer-computer-readable storage medium may be a tangible device that can retain and store instructions for use by an instruction execution device. The computer-computer-readable storage medium may be, but is not limited to, an electronic storage device, a magnetic storage device, an optical storage device, an electromagnetic storage device, a semiconductor storage device, or any suitable combination of the above devices. A non-exhaustive list of more specific examples of the computer-computer-readable storage medium comprises: a portable computer floppy disk, a hard disk, a Random Access Memory (RAM), a Read-Only Memory (ROM), an Erasable Programmable Read-Only Memory (EPROM or flash memory), a Static Random Access Memory (SRAM), a portable Compact Disc Read-Only Memory (CD-ROM), a Digital Versatile Disc (DVD), a memory card, a floppy disk, a coded mechanical device (such as a punched card or a groove with a raised structure recorded with instructions), and any suitable combination of the above devices. The computer-computer-readable storage medium used herein should not be construed as a transitory signal per se, such as radio waves or other freely propagating electromagnetic waves, electromagnetic waves propagating through a waveguide or other transmission media, or electrical signals transmitted through electrical wires.

In the description of the present application, the term of "a plurality of" indicates two or more than two, unless otherwise explicitly defined. The orientation or position relationships indicated by terms such as "upper" and "lower" are based on the orientation or position relationships shown in the accompanying drawings, and are only for the convenience of describing the present application and simplifying the description, and do not indicate or imply that the indicated device or element must have a specific orientation and be constructed and operated in a specific orientation. Therefore, they shall not be construed as limitations on the present application. Terms such as "connect", "install" and "fix" shall be understood in a broad sense. For example, "connect" may be a fixed connection, a detachable connection, or an integral connection; it may be a direct connection or an indirect connection through an intermediate medium. For those of ordinary skill in the art, the specific meanings of the above terms in the present application can be understood according to specific circumstances.

In the description of the present application, the description of the terms of "an embodiment", "some embodiments", "specific embodiment" and the like is intended to mean that the specific features, structures, materials or characteristics described in combination with the embodiments or examples are comprised in at least one embodiment or example of the present application. In the description, the illustrative expression of the above terms may not indicate the same embodiment or example. In addition, the described specific features, structures, materials or characteristics may be combined with each other in an appropriate method in one or more of any embodiments or examples.

The above-mentioned are merely some embodiments of the present application and are not intended to limit the present application, and for one skilled in the art, various modifications and changes may be made to the present application. Any modifications, equivalent substitutions, improvements and so on should be covered within the scope of protection of the present application.

## Claims

1. A cooking information display method, comprising:
displaying first cooking information, wherein the first cooking information comprises at least one function identifier, and the function identifier is associated with at least one keyword in the first cooking information; and
in response to a first input for the function identifier, displaying a function interface, wherein a function type corresponding to the function interface is associated with information content of the first cooking information.

2. The cooking information display method according to claim 1, wherein, the function interface comprises a cooking control identifier, and the method further comprises:
generating a corresponding cooking control signal in response to a second input for the cooking control identifier; and
sending the cooking control signal to a target cooking device, wherein the cooking control signal is configured to instruct the target cooking device to execute a cooking step corresponding to the first cooking information.

3. The cooking information display method according to claim 1, wherein, the first cooking information comprises a cooking duration, the function interface comprises a timing identifier, and the method further comprises:
starting timing in response to a third input for the timing identifier; and
generating prompt information when a timing duration reaches the cooking duration.

4. The cooking information display method according to claim 1, wherein, the first cooking information comprises cooking data, the function interface comprises a conversion identifier, and the method further comprises:
in response to a fourth input for the conversion identifier, adjusting a measurement unit of the cooking data from a first measurement unit to a second measurement unit.

5. The cooking information display method according to claim 4, further comprising:
determining a target cooking quantity in response to a fifth input; and
adjusting the cooking data according to the target cooking quantity, so that adjusted cooking data matches the target cooking quantity.

6. The cooking information display method according to claim 4, wherein, the cooking data comprises:
a cooking temperature, the cooking duration, and/or an ingredient quantity.

7. The cooking information display method according to any one of claims 1 to 6, further comprising:
receiving a voice input;
determining a target media file based on the voice input; and
playing the target media file.

8. The cooking information display method according to any one of claims 1 to 6, wherein, the first cooking information is information of a N^{th} cooking step in a target cooking recipe, and N is a positive integer;
the method further comprises:
displaying second cooking information in response to a sixth input, wherein the second cooking information is information of a (N+1)^{th} cooking step in the target cooking recipe.

9. The cooking information display method according to any one of claims 1 to 6, further comprising:
displaying a content interface in response to a seventh input for the at least one keyword, wherein displayed content of the content interface is associated with the at least one keyword.

10. A cooking information display apparatus, comprising:
a display module for displaying first cooking information, wherein the first cooking information comprises at least one function identifier, and the function identifier is associated with at least one keyword in the first cooking information; and
in response to a first input for the function identifier, displaying a function interface, wherein a function type corresponding to the function interface is associated with information content of the first cooking information.

11. A cooking information display apparatus, comprising:
a memory for storing a program or an instruction; and
a processor for implementing steps of a cooking information display method according to in any one of claims 1 to 9 when executing the program or instruction.

12. A computer-readable storage medium having a program or an instruction stored therein, wherein, when the program or instruction is executed by a processor, steps of a cooking information display method according to any one of claims 1 to 9 are implemented.

13. A computer program product, stored in a storage medium, wherein, when executed by at least one processor, the computer program product implements steps of a cooking information display method according to any one of claims 1 to 9.

14. An electronic device, comprising:
a cooking information display apparatus according to claim 10 or 11; and/or
a computer-readable storage medium according to claim 12; and/or
a computer program product according to claim 13.
